# EUROPEAN PATENT APPLICATION

(11) **EP 3 214 876 A1**
(43) Date of publication of application: **06.09.2017**
(21) Application number: 14906881.9
(22) Date of filing: 25.11.2014
(51) Int. Cl.: H04W 52/38

(54) **POWER CONTROL APPARATUS, NETWORK SIDE DEVICE, USER EQUIPMENT AND POWER CONTROL METHOD**

(71) Applicant: Huawei Technologies Co., Ltd., Longgang District Shenzhen, Guangdong 518129 (CN)
(72) Inventor: PAN, Yongchao, Shenzhen Guangdong 518129 (CN); WEN, Wei, Shenzhen Guangdong 518129 (CN); XUE, Juhua, Shenzhen Guangdong 518129 (CN); XIE, Song, Shenzhen Guangdong 518129 (CN)
(74) Representative: Goddar, Heinz J.
(86) International application number: PCT/CN2014/092150
(87) International publication number: WO 2016/082099

(57) **Abstract**

Embodiments of the present invention provide a power control apparatus, a network side device, user equipment, and a power control method, which relate to the field of network communications technologies, and the power control method includes: acquiring a data transmission period and a silent period of user equipment UE; receiving, in the silent period, data sent by the UE on a control channel at first power, where the first power is less than second power used by the UE for sending data on the control channel in the data transmission period. This solves problems of relatively high power consumption of the UE on the control channel and a relatively small cell capacity, achieves an effect of reducing power consumption of the UE on an uplink control channel in the silent period, and improves the cell capacity.

## Description

### TECHNICAL FIELD

The present invention relates to the field of network communications technologies, and in particular, to a power control apparatus, a network side device, user equipment, and a power control method.

### BACKGROUND

In a code division multiple access (English: Code Division Multiple Access, CDMA for short) system, power control of an uplink is an important means for maintaining system performance. The uplink is a link on which user equipment (English: User Equipment, UE for short) sends data to a network side device.

Power consumption of the UE on an uplink includes two parts: a data channel part and a control channel part. Power consumption of a data channel includes power consumed when the UE transmits user-plane data, where the power is consumed only when the UE transmits the user-plane data; and power consumption of a control channel includes power consumed when the UE transmits control-plane data, where the power is power consumed regardless of whether the UE transmits the user-plane data because the UE needs to maintain synchronization with a network side device.

It is found that at least the following problem exists in an existing solution: In a current power control policy, power consumption of UE on a control channel is relatively high and a cell capacity is relatively small.

### SUMMARY

In order to solve problems, in the prior art, of relatively high power consumption of UE on a control channel and a relatively small cell capacity, embodiments of the present invention provides a power control apparatus, a network side device, user equipment, and a power control method. The technical solutions are as follows:
A first aspect provides a power control apparatus, including:
   an acquiring module, configured to acquire a data transmission period and a silent period of UE; and
   a receiving module, configured to receive, in the silent period, data sent by the UE on a control channel by using first power, where the first power is less than second power used by the UE for sending data on the control channel in the data transmission period.

In a first possible implementation manner of the first aspect, the apparatus further includes:
a sending module, configured to send a configuration instruction to the UE, where the configuration instruction is used to indicate the data transmission period and/or the silent period of the UE.

With reference to the first aspect or the first possible implementation manner of the first aspect, in a second possible implementation manner of the first aspect, the apparatus further includes:
a first acquiring module, configured to acquire a first power control parameter required for maintaining synchronization with the UE, where transmit power corresponding to the first power control parameter is equal to the first power; and
a first sending module, configured to send a power control instruction to the UE according to the first power control parameter acquired by the first acquiring module, where the power control instruction is used to instruct the UE to send data at the first power in the silent period.

With reference to the first aspect or the first possible implementation manner of the first aspect, in a third possible implementation manner of the first aspect, the apparatus further includes:
a second acquiring module, configured to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where transmit power corresponding to the second power control parameter is equal to the first power; and
a second sending module, configured to send a power control instruction to the UE according to the second power control parameter acquired by the second acquiring module, where the power control instruction is used to instruct the UE to send data at the first power in the silent period.

With reference to the first aspect or the first possible implementation manner of the first aspect, in a fourth possible implementation manner of the first aspect, the apparatus further includes:
a third acquiring module, configured to acquire a first power control parameter required for maintaining synchronization with the UE;
a fourth acquiring module, configured to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where the first power is equal to a maximum value between transmit power corresponding to the first power control parameter and transmit power corresponding to the second power control parameter; and
a third sending module, configured to send a power control instruction to the UE according to the first power control parameter acquired by the third acquiring module and the second power control parameter acquired by the fourth acquiring module, where the power control instruction is used to instruct the UE to send data at the first power in the silent period.

A second aspect provides a power control apparatus that is applied to UE, and the apparatus includes:
an acquiring module, configured to acquire a data transmission period and a silent period; and
a sending module, configured to send, on a control channel, data to a network side device by the UE by using first power in the silent period, where the first power is less than second power used by the UE for sending data on the control channel in the data transmission period.

In a first possible implementation manner of the second aspect, the apparatus further includes:
a receiving module, configured to receive a configuration instruction sent by the network side device, where the acquiring module acquires the data transmission period and/or the silent period of the UE according to the configuration instruction.

In a second possible implementation manner of the second aspect,
the receiving module is configured to receive a power control instruction sent by the network side device; and
the sending module is further configured to send, according to the power control instruction received by the receiving module, data to the network side device at the first power in the silent period.

With reference to the second aspect or the first possible implementation manner of the second aspect or the second possible implementation manner of the second aspect, in a third possible implementation manner of the second aspect, the first power is transmit power corresponding to a first power control parameter required when the UE maintains synchronization with the network side device.

With reference to the second aspect or the first possible implementation manner of the second aspect or the second possible implementation manner of the second aspect, in a fourth possible implementation manner of the second aspect, the first power is transmit power corresponding to a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

With reference to the second aspect or the first possible implementation manner of the second aspect or the second possible implementation manner of the second aspect, in a fifth possible implementation manner of the second aspect, the first power is a maximum value between transmit power corresponding to a first power control parameter and transmit power corresponding to a second power control parameter, where
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

A third aspect provides a network side device, including a processor and a receiver, where
the processor is configured to acquire a data transmission period and a silent period of UE; and
the processor is configured to control, in the silent period, the receiver to receive data sent by the UE on a control channel by using first power, where the first power is less than second power used by the UE for sending data on the control channel in the data transmission period.

In a first possible implementation manner of the third aspect, the apparatus further includes a transmitter, where
the processor is configured to control the transmitter to send a configuration instruction to the UE, where the configuration instruction is used to indicate the data transmission period and/or the silent period of the UE.

With reference to the third aspect or the first possible implementation manner of the third aspect, in a second possible implementation manner of the third aspect, the processor is configured to control the receiver to acquire a first power control parameter required for maintaining synchronization with the UE, where transmit power corresponding to the first power control parameter is equal to the first power; and
the processor is configured to control the transmitter to send, according to the first power control parameter, a power control instruction to the UE, where the power control instruction is used to instruct the UE to send data at the first power in the silent period.

With reference to the third aspect or the first possible implementation manner of the third aspect, in a third possible implementation manner of the third aspect, the processor is configured to control the receiver to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where transmit power corresponding to the second power control parameter is equal to the first power; and
the processor is configured to control the transmitter to send, according to the second power control parameter, a power control instruction to the UE, where the power control instruction is used to instruct the UE to send data at the first power in the silent period.

With reference to the third aspect or the first possible implementation manner of the third aspect, in a fourth possible implementation manner of the third aspect, the processor is configured to control the receiver to acquire a first power control parameter required for maintaining synchronization with the UE;
the processor is configured to control the receiver to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where the first power is equal to a maximum value between transmit power corresponding to the first power control parameter and transmit power corresponding to the second power control parameter; and
the processor is configured to control the transmitter to send, according to the first power control parameter and the second power control parameter, a power control instruction to the UE, where the power control instruction is used to instruct the UE to send data at the first power in the silent period.

A fourth aspect provides user equipment, including a processor and a transmitter, where
the processor is configured to control the receiver to acquire a data transmission period and a silent period; and
the processor is configured to control, in the silent period, the transmitter to send, on a control channel, data to a network side device by using first power, where the first power is less than second power used by the UE for sending data on the control channel in the data transmission period.

In a first possible implementation manner of the fourth aspect, the apparatus further includes a receiver, where
the processor is configured to control the receiver to receive a configuration instruction sent by the network side device, where the configuration instruction is used to indicate the data transmission period and/or the silent period of the UE.

In a second possible implementation manner of the fourth aspect, the processor is configured to control the receiver to receiver a power control instruction sent by the network side device, and
the processor is configured to control the transmitter to send, according to the power control instruction, data to the network side device at the first power in the silent period.

With reference to the fourth aspect or the first possible implementation manner of the fourth aspect or the second possible implementation manner of the fourth aspect, in a third possible implementation manner of the fourth aspect, the first power is transmit power corresponding to a first power control parameter required when the UE maintains synchronization with the network side device.

With reference to the fourth aspect or the first possible implementation manner of the fourth aspect or the second possible implementation manner of the fourth aspect, in a fourth possible implementation manner of the fourth aspect, the first power is transmit power corresponding to a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

With reference to the fourth aspect or the first possible implementation manner of the fourth aspect or the second possible implementation manner of the fourth aspect, in a fifth possible implementation manner of the fourth aspect, the first power is a maximum value between transmit power corresponding to a first power control parameter and transmit power corresponding to a second power control parameter, where
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

A fifth aspect provides a power control method, including:
acquiring a data transmission period and a silent period of UE; and
receiving, in the silent period, data sent by the UE on a control channel by using first power, where the first power is less than second power used by the UE for sending data on the control channel in the data transmission period.

In a first possible implementation manner of the fifth aspect, the method further includes:
sending a configuration instruction to the UE, where the configuration instruction is used to indicate the data transmission period and/or the silent period of the UE.

With reference to the fifth aspect or the first possible implementation manner of the fifth aspect, in a second possible implementation manner of the fifth aspect, the method further includes:
acquiring a first power control parameter required for maintaining synchronization with the UE, where transmit power corresponding to the first power control parameter is equal to the first power; and
sending a power control instruction to the UE according to the first power control parameter, where the power control instruction is used to instruct the UE to send data at the first power in the silent period.

With reference to the fifth aspect or the first possible implementation manner of the fifth aspect, in a third possible implementation manner of the fifth aspect, the method further includes:
acquiring a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where transmit power corresponding to the second power control parameter is equal to the first power; and
sending a power control instruction to the UE according to the second power control parameter, where the power control instruction is used to instruct the UE to send data at the first power in the silent period.

With reference to the fifth aspect or the first possible implementation manner of the fifth aspect, in a fourth possible implementation manner of the fifth aspect, the method further includes:
acquiring a first power control parameter required for maintaining synchronization with the UE;
acquiring a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where the first power is equal to a maximum value between transmit power corresponding to the first power control parameter and transmit power corresponding to the second power control parameter; and
sending a power control instruction to the UE according to the first power control parameter and the second power control parameter, where the power control instruction is used to instruct the UE to send data at the first power in the silent period.

A sixth aspect provides a power control method, including:
acquiring, by UE, a data transmission period and a silent period; and
sending, by the UE on a control channel, data to a network side device by using first power in the silent period, where the first power is less than second power used by the UE for sending data on the control channel in the data transmission period.

In a first possible implementation manner of the sixth aspect, the acquiring, by UE, a data transmission period and a silent period includes:
receiving, by the UE, a configuration instruction sent by the network side device, where the configuration instruction is used to indicate the data transmission period and/or the silent period of the UE.

In a second possible implementation manner of the sixth aspect, the method further includes:
receiving, by the UE, a power control instruction sent by the network side device; and
the sending, by the UE on a control channel, data to a network side device by using first power includes:
   sending, by the UE according to the power control instruction, the data to the network side device at the first power in the silent period.

With reference to the sixth aspect or the first possible implementation manner of the sixth aspect or the second possible implementation manner of the sixth aspect, in a third possible implementation manner of the sixth aspect, the first power is transmit power corresponding to a first power control parameter required when the UE maintains synchronization with the network side device.

With reference to the sixth aspect or the first possible implementation manner of the sixth aspect or the second possible implementation manner of the sixth aspect, in a fourth possible implementation manner of the sixth aspect, the first power is transmit power corresponding to a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

With reference to the sixth aspect or the first possible implementation manner of the sixth aspect or the second possible implementation manner of the sixth aspect, in a fifth possible implementation manner of the sixth aspect, the first power is a maximum value between transmit power corresponding to a first power control parameter and transmit power corresponding to a second power control parameter, where
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

Beneficial effects of the technical solutions provided in the embodiments of the present invention are as follows:
UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a structural block diagram of a power control apparatus according to an embodiment of the present invention;
FIG 2 is a structural block diagram of a power control apparatus according to another embodiment of the present invention;
FIG. 3 is a structural block diagram of a power control apparatus according to still another embodiment of the present invention;
FIG. 4 is a structural block diagram of a power control apparatus according to still another embodiment of the present invention;
FIG. 5 is a structural block diagram of a network side device according to an embodiment of the present invention;
FIG. 6 is a structural block diagram of a network side device according to another embodiment of the present invention;
FIG. 7 is a structural block diagram of user equipment according to an embodiment of the present invention;
FIG. 8 is a structural block diagram of user equipment according to another embodiment of the present invention;
FIG. 9 is a method flowchart of a power control method according to an embodiment of the present invention;
FIG 10 is a method flowchart of a power control method according to another embodiment of the present invention;
FIG. 11 is a method flowchart of a power control method according to still another embodiment of the present invention;
FIG. 12 is a schematic diagram of a transmit power change of an uplink control channel of UE according to an embodiment of the present invention;
FIG. 13 is a method flowchart of a power control method according to still another embodiment of the present invention;
FIG. 14 is a method flowchart of a power control method according to still another embodiment of the present invention; and
FIG 15 is a method flowchart of a power control method according to still another embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

Several nouns involved in all the embodiments are briefly introduced first.

A data transmission period refers to a period in which UE transmits, on a data channel, user-plane data to a network side device.

A silent period refers to a period in which UE does not transmit, on a data channel, user-plane data to a network side device.

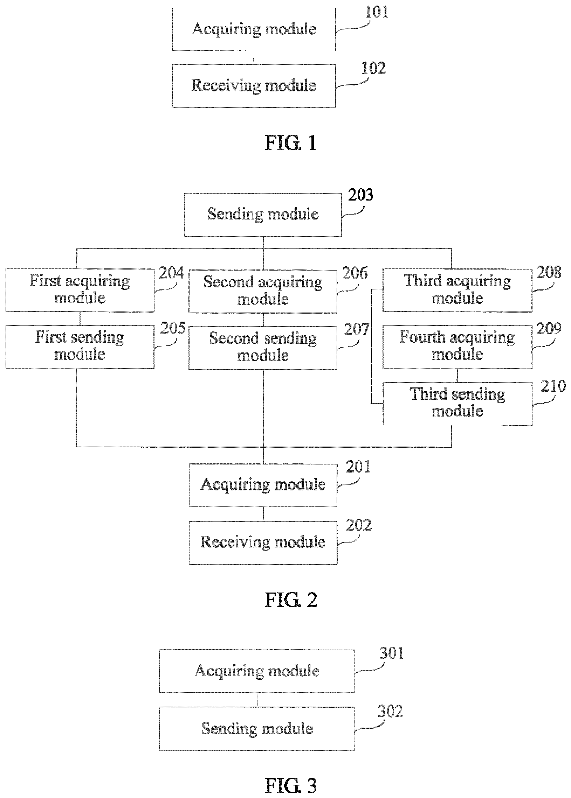

Referring to FIG. 1, FIG. 1 shows a structural block diagram of a power control apparatus according to an embodiment of the present invention, and the power control apparatus may be implemented as a part or all of a network side device by using software, hardware, or a combination of the software and the hardware. The power control apparatus includes an acquiring module 101 and a receiving module 102, where
the acquiring module 101 is configured to acquire a data transmission period and a silent period of user equipment UE; and
the receiving module 102 is configured to receive, in the silent period, data sent by the UE on a control channel by using first power, where the first power is less than second power used by the UE for sending data on the control channel in the data transmission period.

In conclusion, according to the power control apparatus provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

Referring to FIG. 2, FIG. 2 shows a structural block diagram of a power control apparatus according to another embodiment of the present invention, and the power control apparatus may be implemented as a part or all of a network side device by using software, hardware, or a combination of the software and the hardware. The power control apparatus includes an acquiring module 201 and a receiving module 202, where
the acquiring module 201 is configured to acquire a data transmission period and a silent period of user equipment UE; and
the receiving module 202 is configured to receive, in the silent period, data sent by the UE on a control channel by using first power, where the first power is less than second power used by the UE for sending data on the control channel in the data transmission period.

Optionally, the apparatus further includes:
a sending module 203, configured to send a configuration instruction to the UE, where the configuration instruction is used to indicate the data transmission period and/or the silent period of the UE.

Optionally, the apparatus further includes:
a first acquiring module 204, configured to acquire a first power control parameter required for maintaining synchronization with the UE, where transmit power corresponding to the first power control parameter is equal to the first power; and
a first sending module 205, configured to send a power control instruction to the UE according to the first power control parameter acquired by the first acquiring module 204, where the power control instruction is used to instruct the UE to send data at the first power in the silent period.

Optionally, the apparatus further includes:
a second acquiring module 206, configured to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where transmit power corresponding to the second power control parameter is equal to the first power; and
a second sending module 207, configured to send a power control instruction to the UE according to the second power control parameter acquired by the second acquiring module 206, where the power control instruction is used to instruct the UE to send data at the first power in the silent period.

Optionally, the apparatus further includes:
a third acquiring module 208, configured to acquire a first power control parameter required for maintaining synchronization with the UE;
a fourth acquiring module 209, configured to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where the first power is equal to a maximum value between transmit power corresponding to the first power control parameter and transmit power corresponding to the second power control parameter; and
a third sending module 210, configured to send a power control instruction to the UE according to the first power control parameter acquired by the third acquiring module 208 and the second power control parameter acquired by the fourth acquiring module 209, where the power control instruction is used to instruct the UE to send data at the first power in the silent period.

Optionally, the acquiring module 201, the first acquiring module 204, the second acquiring module 206, the third acquiring module 208, and the fourth acquiring module 209 may be a same module, or may be different modules, and details are not described herein again.

Optionally, the first sending module 205, the second sending module 207, and the third sending module 210 may be a same module, or may be different modules, and details are not described herein again.

In conclusion, according to the power control apparatus provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

Referring to FIG. 3, FIG. 3 shows a structural block diagram of a power control apparatus according to still another embodiment of the present invention, and the power control apparatus may be implemented as a part or all of UE by using software, hardware, or a combination of the software and the hardware. The power control apparatus includes an acquiring module 301 and a sending module 302, where
the acquiring module 301 is configured to acquire a data transmission period and a silent period; and
the sending module 302 is configured to send, on a control channel, data to a network side device by the UE by using first power in the silent period, where the first power is less than second power used by the UE for sending data on the control channel in the data transmission period.

In conclusion, according to the power control apparatus provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

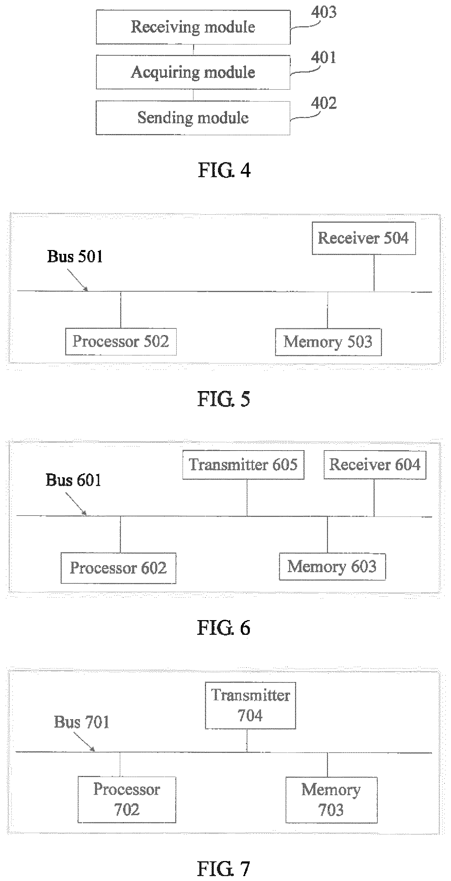

Referring to FIG 4, FIG 4 shows a structural block diagram of a power control apparatus according to still another embodiment of the present invention, and the power control apparatus may be implemented as a part or all of UE by using software, hardware, or a combination of the software and the hardware. The power control apparatus includes an acquiring module 401 and a sending module 402, where
the acquiring module 401 is configured to acquire a data transmission period and a silent period; and
the sending module 402 is configured to send, on a control channel, data to a network side device by the UE by using first power in the silent period, where the first power is less than second power used by the UE for sending data on the control channel in the data transmission period.

Optionally, the apparatus further includes:
a receiving module 403, configured to receive a configuration instruction sent by the network side device, where the acquiring module 401 acquires the data transmission period and/or the silent period of the UE according to the configuration instruction.

Optionally,
the receiving module 403 is configured to receive a power control instruction sent by the network side device; and
the sending module 402 is further configured to send, according to the power control instruction received by the receiving module 403, data to the network side device at the first power in the silent period.

Optionally, the first power is transmit power corresponding to a first power control parameter required when the UE maintains synchronization with the network side device.

Optionally, the first power is transmit power corresponding to a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

Optionally, the first power is a maximum value between transmit power corresponding to the first power control parameter and transmit power corresponding to the second power control parameter, where
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

In conclusion, according to the power control apparatus provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

Referring to FIG 5, FIG. 5 shows a structural block diagram of a network side device according to an embodiment of the present invention. The network side device includes a bus 501, and a processor 502, a memory 503, and a receiver 504 that are connected to the bus 501, where the memory 503 is configured to store several instructions, and the several instructions are configured to be executed by the processor 502.

The processor 502 is configured to acquire a data transmission period and a silent period of user equipment UE; and
the processor 502 is configured to control, in the silent period, the receiver 504 to receive data sent by the UE on a control channel by using first power, where the first power is less than second power used by the UE for sending data on the control channel in the data transmission period.

In conclusion, according to the network side device provided in this embodiment, UE is controlled to send data to the network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

Referring to FIG. 6, FIG. 6 shows a structural block diagram of a network side device according to another embodiment of the present invention. The network side device includes a bus 601, and a processor 602, a memory 603, and a receiver 604 that are connected to the bus 601, where the memory 603 is configured to store several instructions, and the several instructions are configured to be executed by the processor 602.

The processor 602 is configured to acquire a data transmission period and a silent period of user equipment UE; and
the processor 602 is configured to control, in the silent period, the receiver 604 to receive data sent by the UE on a control channel by using first power, where the first power is less than second power used by the UE for sending data on the control channel in the data transmission period.

Optionally, the network side device further includes a transmitter 605 connected to the bus 601.

The processor 602 is configured to control the transmitter 605 to send a configuration instruction to the UE, where the configuration instruction is used to indicate the data transmission period and/or the silent period of the UE.

Optionally, the processor 602 is configured to control the receiver 604 to acquire a first power control parameter required for maintaining synchronization with the UE, where transmit power corresponding to the first power control parameter is equal to the first power; and
the processor 602 is configured to control the transmitter 605 to send, according to the first power control parameter, a power control instruction to the UE, where the power control instruction is used to instruct the UE to send data at the first power in the silent period.

Optionally, the processor 602 is configured to control the receiver 604 to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where transmit power corresponding to the second power control parameter is equal to the first power; and
the processor 602 is configured to control the transmitter 605 to send, according to the second power control parameter, a power control instruction to the UE, where the power control instruction is used to instruct the UE to send data at the first power in the silent period.

Optionally, the processor 602 is configured to control the receiver 604 to acquire a first power control parameter required for maintaining synchronization with the UE;
the processor 602 is configured to control the receiver 604 to acquire a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, where the first power is equal to a maximum value between transmit power corresponding to the first power control parameter and transmit power corresponding to the second power control parameter; and
the processor 602 is configured to control the transmitter 605 to send, according to the first power control parameter and the second power control parameter, a power control instruction to the UE, where the power control instruction is used to instruct the UE to send data at the first power in the silent period.

In conclusion, according to the network side device provided in this embodiment, UE is controlled to send data to the network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

Referring to FIG. 7, FIG. 7 shows a structural block diagram of user equipment according to an embodiment of the present invention. The user equipment includes a bus 701, and a processor 702, a memory 703 and a transmitter 704 that are connected to the bus 701, where the memory 703 is configured to store several instructions, and the several instructions are configured to be executed by the processor 702.

The processor 702 is configured to control the receiver to acquire a data transmission period and a silent period; and
the processor 702 is configured to control, in the silent period, the transmitter 704 to send, on a control channel, data to a network side device by using first power, where the first power is less than second power used by the UE for sending data on the control channel in the data transmission period.

In conclusion, according to the UE provided in this embodiment, the UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

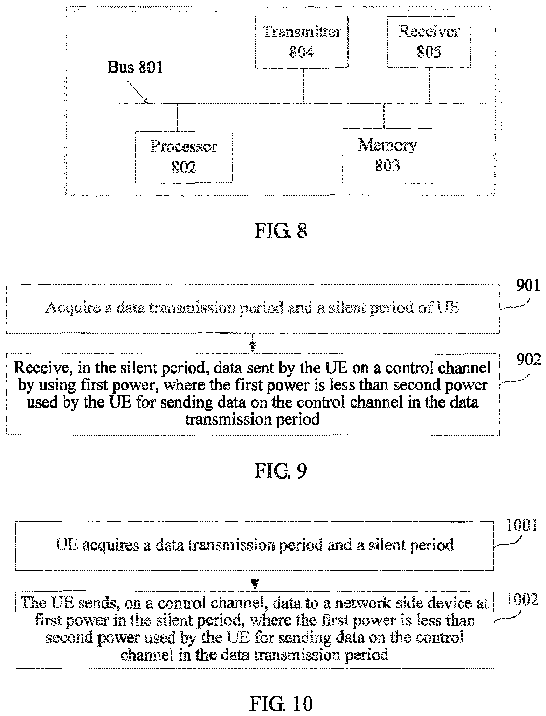

Referring to FIG. 8, FIG. 8 shows a structural block diagram of user equipment according to another embodiment of the present invention. The user equipment includes a bus 801, and a processor 802, a memory 803 and a transmitter 804 that are connected to the bus 801, where the memory 803 is configured to store several instructions, and the several instructions are configured to be executed by the processor 802.

The processor 802 is configured to control the receiver to acquire a data transmission period and a silent period; and
the processor 802 is configured to control, in the silent period, the transmitter 804 to send, on a control channel, data to a network side device by using first power, where the first power is less than second power used by the UE for sending data on the control channel in the data transmission period.

Optionally, the user equipment further includes: a receiver 805 connected to the bus 801; where
the processor 802 is configured to control the receiver 805 to receive a configuration instruction sent by the network side device, where the configuration instruction is used to indicate the data transmission period and/or the silent period of the UE.

Optionally, the processor 802 is configured to control the receiver 805 to receive a power control instruction sent by the network side device; and
the processor 802 is configured to control the transmitter 804 to send, according to the power control instruction, data to the network side device at the first power in the silent period.

Optionally, the first power is transmit power corresponding to a first power control parameter required when the UE maintains synchronization with the network side device.

Optionally, the first power is transmit power corresponding to a second power control parameter, where the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

Optionally, the first power is a maximum value between transmit power corresponding to the first power control parameter and transmit power corresponding to the second power control parameter, where
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

In conclusion, according to the UE provided in this embodiment, the UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

Referring to FIG. 9, FIG. 9 shows a method flowchart of a power control method according to an embodiment of the present invention, and in this embodiment, an example in which the power control method is applied to a network side device is used for description. As shown in FIG. 9, the power control method may include the following steps:
Step 901: Acquire a data transmission period and a silent period of UE.

Optionally, the network side device may configure the data transmission period for the UE based on a single hybrid automatic repeat request (English: Single Hybrid Automatic Repeat Request, Single HARQ for short) technology, which is not limited in this embodiment.

Optionally, the network side device may also configure the silent period for the UE according to the Single HARQ technology.

Optionally, the network side device may also configure the data transmission period and the silent period for the UE according to the Single HARQ technology.

Optionally, the network side device may pre-configure the data transmission period and/or the silent period.

Optionally, the network side device determines a data transmission period specified in a communications protocol as the data transmission period of the UE.

Step 902: Receive, in the silent period, data sent by the UE on a control channel by using first power, where the first power is less than second power used by the UE for sending data on the control channel in the data transmission period.

In conclusion, according to the power control method provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

Referring to FIG. 10, FIG. 10 shows a method flowchart of a power control method according to another embodiment of the present invention, and in this embodiment, an example in which the power control method is applied to UE is used for description. As shown in FIG. 10, the power control method may include the following steps:
Step 1001: UE acquires a data transmission period and a silent period.

Optionally, the UE receives a configuration instruction sent by a network side device, where the configuration instruction is used to indicate the data transmission period and/or the silent period of the UE.

Optionally, in a communications protocol, the UE may pre-configure a data transmission period and/or the silent period; therefore, the UE may further use the pre-configured data transmission period as the data transmission period of the UE, and use another period except the data transmission period as the silent period, which is not limited in this embodiment.

Optionally, the UE directly determines a data transmission period specified in a communications protocol as the data transmission period of the UE, and determines a period except the data transmission period as the silent period, which is not limited in this embodiment.

Step 1002: The UE sends, on a control channel, data to a network side device by using first power in the silent period, where the first power is less than second power used by the UE for sending data on the control channel in the data transmission period.

In conclusion, according to the power control method provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

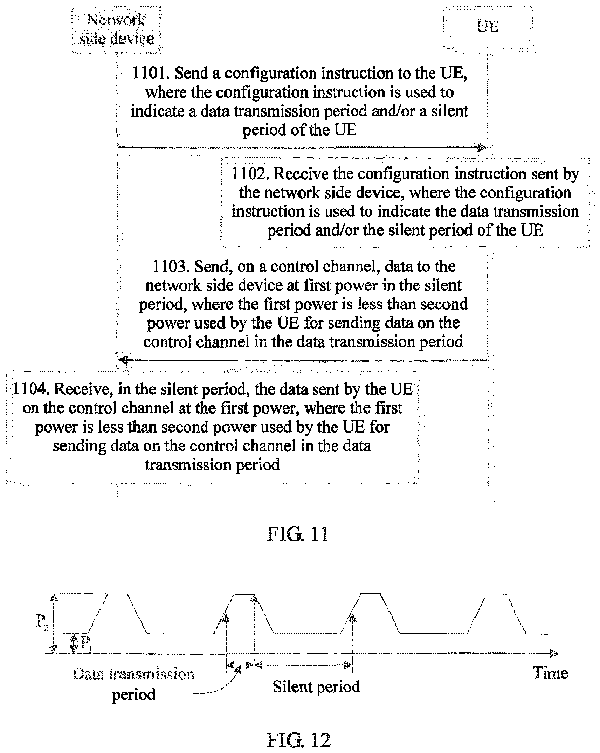

Referring to FIG 11, FIG. 11 shows a method flowchart of a power control method according to still another embodiment of the present invention, and as shown in FIG. 11, the power control method may include the following steps:
Step 1101: A network side device sends a configuration instruction to UE, where the configuration instruction is used to indicate a data transmission period and/or a silent period of the UE.
   Optionally, the network side device may acquire the configuration instruction according to a method in step 111.
Step 1102: The UE receives the configuration instruction sent by the network side device, where the configuration instruction is used to indicate the data transmission period and/or the silent period of the UE.

After receiving the configuration instruction, the UE may acquire the data transmission period and the silent period according to the configuration instruction.

Optionally, when the configuration instruction is used to indicate the data transmission period of the UE, the UE may directly acquire the data transmission period, and use another period except the data transmission period as the silent period.

Optionally, when the configuration instruction is used to indicate the silent period of the UE, the UE may directly acquire the silent period, and use another period except the silent period as the data transmission period.

Optionally, when the configuration instruction is used to indicate the data transmission period and the silent period of the UE, the UE may directly acquire the data transmission period and the silent period.

After acquiring the data transmission period and the silent period, the UE transmits user-plane data to the network side device only in the data transmission period, and does not transmit the user-plane data to the network side device in the silent period.

Step 1103: The UE sends, on a control channel, data to the network side device by using first power in the silent period, where the first power is less than second power used by the UE for sending data on the control channel in the data transmission period.

Step 1104: The network side device receives, in the silent period, the data sent by the UE on the control channel at the first power, where the first power is less than the second power used by the UE for sending data on the control channel in the data transmission period.

In conclusion, according to the power control method provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

As shown in FIG 12, after control is performed on transmit power of an uplink control channel of UE by using the power control method according to this embodiment of the present invention, transmit power P₁ of the uplink control channel of the UE in a silent period is less than transmit power P₂ of the uplink control channel of the UE in a data transmission period. Therefore, the power control method provided in this embodiment reduces the transmit power of the uplink control channel of the UE in the silent period and improves a cell capacity.

In addition, before step 1103, the network side device may further send a power control instruction to the UE, where the power control instruction is used to instruct the UE to send data at the first power on the control channel in the silent period. Optionally, the step may include the following three possible implementation manners.

### First possible implementation manner:

Acquiring a first power control parameter W₁ required for maintaining synchronization with the UE, and sending a power control instruction to the UE according to the first power control parameter W₁, where transmit power corresponding to the first power control parameter is equal to the first power.

### Second possible implementation manner:

Acquiring a second power control parameter W₂, and sending a power control instruction to the UE according to the second power control parameter W₂,

The second power control parameter W₂ is a difference between a threshold ΔW and a power control parameter W₃ of the control channel of the UE in the data transmission period, that is, W₂=W₃-ΔW, and the threshold ΔW is a maximum empirical threshold between the power control parameter of the control channel of the UE in the data transmission period and a power control parameter of the control channel of the UE in the silent period, where transmit power corresponding to the second power control parameter W₂ is equal to the first power.

### Third possible implementation manner:

Acquiring a first power control parameter W₁ required for maintaining synchronization with the UE, acquiring a second power control parameter W₂, and sending a power control instruction to the UE according to the first power control parameter W₁ and the second power control parameter W₂.

The second power control parameter W₂ is a difference between a threshold ΔW and a power control parameter W₃ of the control channel of the UE in the data transmission period, that is, W₂=W₃-ΔW, and the threshold ΔW is a maximum empirical threshold between the power control parameter of the control channel of the UE in the data transmission period and a power control parameter of the control channel of the UE in the silent period, where the first power is equal to a maximum value between transmit power corresponding to the first power control parameter and transmit power corresponding to the second power control parameter.

Therefore, the following separately describes in detail, in different embodiments, the power control method.

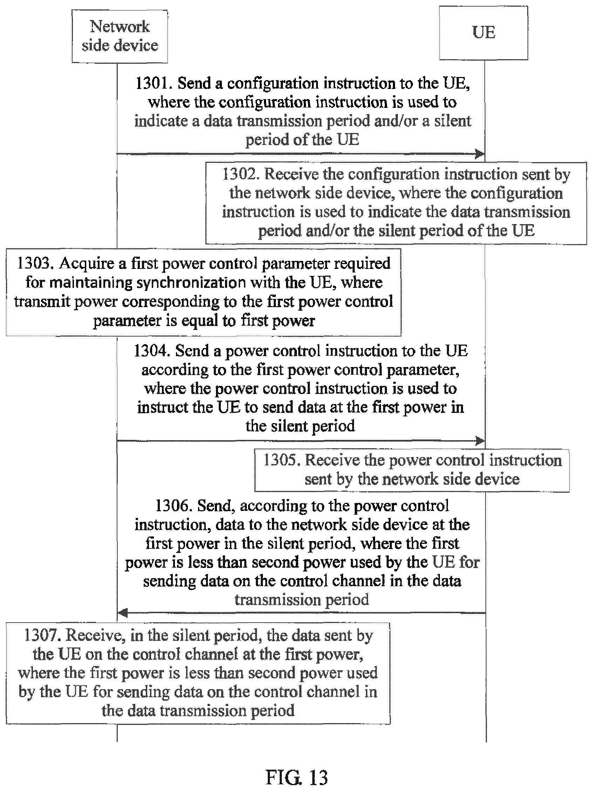

Referring to FIG 13, FIG. 13 shows a method flowchart of a power control method according to still another embodiment of the present invention, and in this embodiment, an example in which a network side device sends a power control instruction to UE in the foregoing first manner is used for description. As shown in FIG. 13, the power control method may include the following steps:
Step 1301: The network side device sends a configuration instruction to the UE, where the configuration instruction is used to indicate a data transmission period and/or a silent period of the UE.

Before the UE sends user-plane data to the network side device, the network side device may send the configuration instruction to the UE, where the configuration instruction is used to indicate the data transmission period and/or the silent period of the UE.

Optionally, the network side device may acquire the configuration instruction according to a method in step 101.

Step 1302: The UE receives the configuration instruction sent by the network side device, where the configuration instruction is used to indicate the data transmission period and/or the silent period of the UE.

After receiving the configuration instruction, the UE may acquire the data transmission period and the silent period according to the configuration instruction.

Optionally, when the configuration instruction is used to indicate the data transmission period of the UE, the UE may directly acquire the data transmission period, and use another period except the data transmission period as the silent period.

Optionally, when the configuration instruction is used to indicate the silent period of the UE, the UE may directly acquire the silent period, and use another period except the silent period as the data transmission period.

Optionally, when the configuration instruction is used to indicate the data transmission period and the silent period of the UE, the UE may directly acquire the data transmission period and the silent period.

After acquiring the data transmission period and the silent period, the UE transmits the user-plane data to the network side device only in the data transmission period, and does not transmit the user-plane data to the network side device in the silent period.

Step 1303: The network side device acquires a first power control parameter required for maintaining synchronization with the UE, where transmit power corresponding to the first power control parameter is equal to first power.

The network side device may acquire a power control parameter that is required when the UE maintains synchronization with the network side device and is specified in a communications protocol, and use the acquired power control parameter as the first power control parameter.

The power control parameter may be a signal-to-noise ratio, a bit error rate, a block error rate, a bit error rate, or a frame error rate, which is not limited in this embodiment, and in this embodiment, an example in which the power control parameter is the signal-to-noise ratio is used for description.

It should be noted that, when a difference between the power control parameter that is specified in the communications protocol and is acquired by the network side device and an actual power control parameter of the UE is less than a preset threshold, the UE may still maintain approximate synchronization with the network side device. Therefore, in order to further reduce transmit power of an uplink control channel of the UE in the silent period, the network side device may further use a difference between the preset threshold and the acquired power control parameter specified in the communications protocol as the first power control parameter, which is not limited in this embodiment.

Step 1304: The network side device sends a power control instruction to the UE according to the first power control parameter, where the power control instruction is used to instruct the UE to send data at the first power in the silent period.

The step of sending, by the network side device, the power control instruction to the UE according to the first power control parameter may include:
First: acquiring a current power control parameter of the UE at a periodic power adjustment moment corresponding to the silent period.
   The network side device may adjust the transmit power of the uplink control channel of the UE in a periodic adjustment manner. Specifically, the network side device may first acquire the current power control parameter of the UE at the periodic power adjustment moment corresponding to the silent period.
   The periodic power adjustment moment refers to a moment each time the network side device adjusts the transmit power of the uplink control channel of the UE. For example, the network side device may adjust the transmit power of the uplink control channel of the UE once every transmission time interval (English: Transmission Time Interval, TTI for short), and in this case, the periodic power adjustment moment is each TTI moment.
   The step of acquiring, by the network side device, the current power control parameter of the UE may include: receiving, by the network side device, a signal sent by the UE, calculating a signal-to-noise ratio of the received signal, and using the signal-to-noise ratio obtained by calculation as a current signal-to-noise ratio of the UE. Certainly, the network side device may further acquire the current signal-to-noise ratio of the UE in another acquiring manner, which is not limited in this embodiment.
Second: calculating an adjustment value of the first power of this power adjustment according to the current power control parameter and the first power control parameter.
   The network side device may compare a value of the current power control parameter and that of the first power control parameter, and determine the adjustment value of the first power according to a comparison result.
   The network side device may adjust the transmit power of the uplink control channel of the UE by means of a preset power adjustment step, that is, at each periodic power adjustment moment, the network side device may instruct the UE to adjust the transmit power of the uplink control channel by the preset power adjustment step.
   Specifically, when the power control parameter is the signal-to-noise ratio, and the current power control parameter is less than the first power control parameter, the network side device may instruct the UE to increase the transmit power of the uplink control channel one preset power adjustment step, that is, a first power control adjustment value is a positive preset power adjustment step; when the current power control parameter is greater than the first power control parameter, the network side device may instruct the UE to reduce the transmit power of the uplink control channel one preset power adjustment step, that is, the adjustment value of the first power is a negative preset power adjustment step.
   For example, that the preset power adjustment step is 1 is used as an example. When the network side device detects that the current power control parameter is greater than the first power control parameter, the network side device may determine the adjustment value of the first power as -1dB.
   It should be noted that, in this embodiment, that each adjustment is performed by one preset power adjustment step is used only as an example, and a network side device may further adjust the transmit power of the uplink control channel of the UE in another adjustment manner, which is not limited in this embodiment.
Third: sending a power control instruction that carries the adjustment value of the first power to the UE.

After obtaining the adjustment value of the first power by calculation, the network side device may send the power control instruction that carries the adjustment value of the first power to the UE.

Step 1305: The UE receives the power control instruction sent by the network side device.

Step 1306: The UE sends, according to the power control instruction, data to the network side device at the first power in the silent period, where the first power is less than second power used by the UE for sending data on the control channel in the data transmission period.

After receiving the power control instruction sent by the network side device, the UE may adjust the transmit power of the control channel of the UE according to the power control instruction. For example, that the adjustment value, of the first power, carried in the power control instruction is -1dB is used as an example. After receiving the power control instruction, the UE may reduce the transmit power of the uplink control channel by 1dB.

After the UE performs an adjustment on the transmit power of the uplink control channel according to a power control instruction received at each periodic power adjustment moment in the silent period, the transmit power of the control channel of the UE is the first power, and the UE sends data to the network side device at the adjusted first power in the silent period. The first power is transmit power corresponding to the first power control parameter required when the UE maintains synchronization with the network side device.

It should be noted that, when the UE sends data at the first power, a power control parameter of the control channel of the UE is the first power control parameter, or is not less than the first power control parameter, which is not limited in this embodiment.

Step 1307: The network side device receives, in the silent period, the data sent by the UE on the control channel at the first power, where the first power is less than the second power used by the UE for sending data on the control channel in the data transmission period.

In conclusion, according to the power control method provided in this embodiment, UE is controlled to send data to a network side device at first power in a silent period, where the first power is less than second power used by the UE for sending data on a control channel in a data transmission period, which solves problems of relatively high power consumption of the UE on the control channel and a small cell capacity, achieves an effect of reducing power consumption of the UE on an uplink control channel in the silent period, and improves the cell capacity.

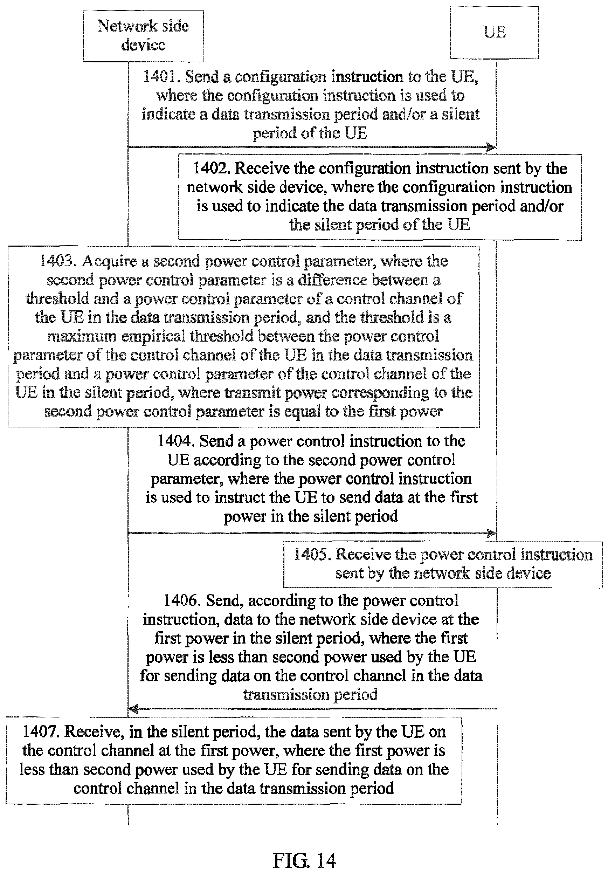

Referring to FIG. 14, FIG. 14 shows a method flowchart of a power control method according to still another embodiment of the present invention, and in this embodiment, an example in which a network side device sends a power control instruction to UE in the foregoing second manner is used for description. As shown in FIG. 14, the power control method may include the following steps:
Step 1401: The network side device sends a configuration instruction to the UE, where the configuration instruction is used to indicate a data transmission period and/or a silent period of the UE.

Before the UE sends user-plane data to the network side device, the network side device may send the configuration instruction to the UE, where the configuration instruction is used to indicate the data transmission period and/or the silent period of the UE.

Optionally, the network side device may acquire the configuration instruction according to a method in step 101.

Step 1402: The UE receives the configuration instruction sent by the network side device, where the configuration instruction is used to indicate the data transmission period and/or the silent period of the UE.

After receiving the configuration instruction, the UE may acquire the data transmission period and the silent period according to the configuration instruction.

Optionally, when the configuration instruction is used to indicate the data transmission period of the UE, the UE may directly acquire the data transmission period, and use another period except the data transmission period as the silent period.

Optionally, when the configuration instruction is used to indicate the silent period of the UE, the UE may directly acquire the silent period, and use another period except the silent period as the data transmission period.

Optionally, when the configuration instruction is used to indicate the data transmission period and the silent period of the UE, the UE may directly acquire the data transmission period and the silent period.

After acquiring the data transmission period and the silent period, the UE transmits the user-plane data to the network side device only in the data transmission period, and does not transmit the user-plane data to the network side device in the silent period.

Step 1403: The network side device acquires a second power control parameter, where the second power control parameter is a difference between a threshold and a power control parameter of a control channel of the UE in the data transmission period, and the threshold is a maximum empirical threshold between the power control parameter of the control channel of the UE in the data transmission period and a power control parameter of the control channel of the UE in the silent period, where transmit power corresponding to the second power control parameter is equal to the first power.

The step of acquiring, by the network side device, the second power control parameter may include:
First: acquiring the threshold.
   The network side device may acquire the threshold first, where the threshold is the maximum empirical threshold between the power control parameter of the control channel of the UE in the data transmission period and the power control parameter of the control channel of the UE in the silent period.
Second: acquiring the power control parameter of the control channel of the UE in the data transmission period.
   Optionally, the network side device may receive a signal sent by the UE, calculate an uplink power control parameter of the UE according to the signal and preset data transmission quality, and use the uplink power control parameter obtained by calculation as the power control parameter of the control channel of the UE in the data transmission period.
   Certainly, the network side device may further acquire the power control parameter in another acquiring manner, and the foregoing acquiring manner is only used as an example for description in this embodiment, which constitutes no limitation on an actual acquiring manner.
Third: calculating the difference between the threshold and the power control parameter of the control channel of the UE in the data transmission period, and using the difference obtained by calculation as the second power control parameter.

For example, it is assumed that the threshold is ΔW, and the power control parameter of the control channel of the UE in the data transmission period is W₃, then the second power control parameter is W₂=W₃-ΔW.

It should be noted that, in this embodiment, that the network side device acquires the second power control parameter in the foregoing acquiring manner is only used as an example, and the network side device may further acquire the second power control parameter in another acquiring manner, which is not limited in this embodiment.

It should further be noted that, in this embodiment, that the threshold is first acquired and then the power control parameter of the control channel of the UE in the data transmission period is then acquired is only used an example. Optionally, the network side device may further simultaneously acquire the threshold and the power control parameter of the control channel of the UE in the data transmission period; or first acquire the power control parameter of the control channel of the UE in the data transmission period, and then acquire the threshold, which is not limited in this embodiment.

Step 1404: The network side device sends the power control instruction to the UE according to the second power control parameter, where the power control instruction is used to instruct the UE to send data at the first power in the silent period.

Step 1405: The UE receives the power control instruction sent by the network side device.

Step 1406: The UE sends, according to the power control instruction, data to the network side device at the first power in the silent period, where the first power is less than second power used by the UE for sending data on the control channel in the data transmission period.

The first power is transmit power corresponding to the second power control parameter, where the second power control parameter is a difference between the threshold and the power control parameter of the control channel of the UE in the data transmission period, and the threshold is the maximum empirical threshold between the power control parameter of the control channel of the UE in the data transmission period and the power control parameter of the control channel of the UE in the silent period.

Step 1407: The network side device receives, in the silent period, data sent by the UE on the control channel at the first power, where the first power is less than the second power used by the UE for sending data on the control channel in the data transmission period.

In conclusion, according to the power control method provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and improves the cell capacity.

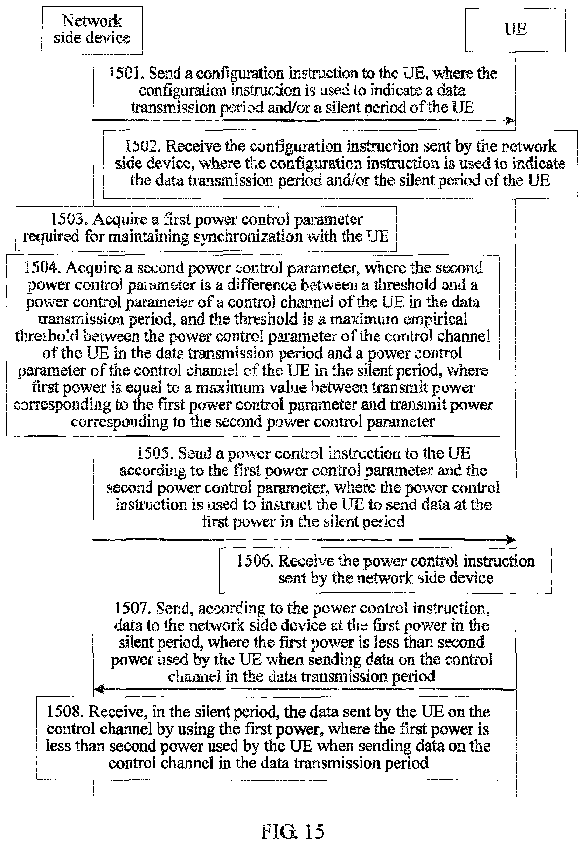

Referring to FIG 15, FIG. 15 shows a method flowchart of a power control method according to still another embodiment of the present invention, and in this embodiment, an example in which a network side device sends a power control instruction to UE in the foregoing third manner is used for description. As shown in FIG. 15, the power control method may include the following steps:
Step 1501: The network side device sends a configuration instruction to the UE, where the configuration instruction is used to indicate a data transmission period and/or a silent period of the UE.

Before the UE sends user-plane data to the network side device, the network side device may send the configuration instruction to the UE, where the configuration instruction is used to indicate the data transmission period and/or the silent period of the UE.

Optionally, the network side device may acquire the configuration instruction according to a method in step 101.

Step 1502: The UE receives the configuration instruction sent by the network side device, where the configuration instruction is used to indicate the data transmission period and/or the silent period of the UE.

After receiving the configuration instruction, the UE may acquire the data transmission period and the silent period according to the configuration instruction.

Optionally, when the configuration instruction is used to indicate the data transmission period of the UE, the UE may directly acquire the data transmission period, and use another period except the data transmission period as the silent period.

Optionally, when the configuration instruction is used to indicate the silent period of the UE, the UE may directly acquire the silent period, and use another period except the silent period as the data transmission period.

Optionally, when the configuration instruction is used to indicate the data transmission period and the silent period of the UE, the UE may directly acquire the data transmission period and the silent period.

After acquiring the data transmission period and the silent period, the UE transmits the user-plane data to the network side device only in the data transmission period, and does not transmit the user-plane data to the network side device in the silent period.

Step 1503: The network side device acquires a first power control parameter required for maintaining synchronization with the UE.

The network side device may acquire a power control parameter that is required when the UE maintains synchronization with the network side device and is specified in a communications protocol, and use the acquired power control parameter as the first power control parameter.

The power control parameter may be a signal-to-noise ratio, a bit error rate, a block error rate, a bit error rate, or a frame error rate, which is not limited in this embodiment, and in this embodiment, an example in which the power control parameter is the signal-to-noise ratio is used for description.

It should be noted that, when a difference between the power control parameter that is specified in the communications protocol and is acquired by the network side device and an actual power control parameter of the UE is less than a preset threshold, the UE may still maintain approximate synchronization with the network side device. Therefore, in order to further reduce transmit power of an uplink control channel of the UE in the silent period, the network side device may further use a difference between the preset threshold and the acquired power control parameter specified in the communications protocol as the first power control parameter, which is not limited in this embodiment.

Step 1504: The network side device acquires a second power control parameter, where the second power control parameter is a difference between a threshold and a power control parameter of a control channel of the UE in the data transmission period, and the threshold is a maximum empirical threshold between the power control parameter of the control channel of the UE in the data transmission period and a power control parameter of the control channel of the UE in the silent period, where first power is equal to a maximum value between transmit power corresponding to the first power control parameter and transmit power corresponding to the second power control parameter.

The step of acquiring, by the network side device, the second power control parameter may include:
First: acquiring the threshold.
   The network side device may acquire the threshold first, where the threshold is the maximum empirical threshold between the power control parameter of the control channel of the UE in the data transmission period and the power control parameter of the control channel of the UE in the silent period.
Second: acquiring the power control parameter of the control channel of the UE in the data transmission period.
   Optionally, the network side device may receive a signal sent by the UE, calculate an uplink power control parameter of the UE according to the signal and preset data transmission quality, and use the uplink power control parameter obtained by calculation as the power control parameter of the control channel of the UE in the data transmission period.
   Certainly, the network side device may further acquire the power control parameter in another acquiring manner, and the foregoing acquiring manner is only used as an example for description in this embodiment, which constitutes no limitation on an actual acquiring manner.
Third: calculating the difference between the threshold and the power control parameter of the control channel of the UE in the data transmission period, and using the difference obtained by calculation as the second power control parameter.

For example, it is assumed that the threshold is ΔW, and the power control parameter of the control channel of the UE in the data transmission period is W₃, then the second power control parameter is W₂ = W₃ - ΔW.

Step 1505: The network side device sends the power control instruction to the UE according to the first power control parameter and the second power control parameter, where the power control instruction is used to instruct the UE to send data at the first power in the silent period.

After acquiring the first power control parameter and the second power parameter, the network side device may send the power control instruction to the UE according to the first power control parameter and the second power control parameter.

Optionally, when the power control parameter is the signal-to-noise ratio, the network side device may select one with a larger value in the first power control parameter and the second power control parameter, then send the power control instruction to the UE according to the selected power control parameter.

When the power control parameter is the bit error rate, the block error rate, the bit error rate, or the frame error rate, the network side device may select one with a smaller value in the first power control parameter and the second power control parameter, then send the power control instruction to the UE according to the selected power control parameter.

That the power control parameter is the signal-to-noise ratio and the first power control parameter is W₁ is used as an example. The power control parameter selected by the network side device is W=Max(W₁,W₂)=Max(W₁,(W₃-ΔW)).

Step 1506: The UE receives the power control instruction sent by the network side device.

Step 1507: The UE sends, according to the power control instruction, data to the network side device at the first power in the silent period, where the first power is less than second power used by the UE for sending data on the control channel in the data transmission period.

The first power is a maximum value between transmit power corresponding to the first power control parameter and transmit power corresponding to the second power control parameter, where
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

Step 1508: The network side device receives, in the silent period, the data sent by the UE on the control channel at the first power, where the first power is less than the second power used by the UE for sending data on the control channel in the data transmission period.

In conclusion, according to the power control method provided in this embodiment, UE is controlled to send data to a network side device at first power in a silent period, where the first power is less than second power used by the UE for sending data on a control channel in a data transmission period, which solves problems of relatively high power consumption of the UE on the control channel and a relatively small cell capacity, achieves an effect of reducing power consumption of the UE on an uplink control channel in the silent period, and therefore improves the cell capacity.

Optionally, in the foregoing embodiments, the UE may send, on a control channel, data to the network side device at second power in a data transmission period. Correspondingly, the network side device may receive the data sent by the UE on the control channel at the second power.

Optionally, before the UE sends the data to the network side device at the second power on the control channel, the network side device may further perform the following steps:
First: Acquire a third power control parameter of the UE in the data transmission period based on a policy of ensuring data transmission quality.
   The method of acquiring, by the network side device, the third power control parameter may include: receiving, by the network side device, a signal sent by the UE, calculating an uplink power control parameter of the UE according to the signal and preset data transmission quality, and using the uplink power control parameter obtained by calculation as the third power control parameter.
   Certainly, the network side device may further acquire the third power control parameter in another acquiring manner, and the foregoing acquiring manner is only used as an example for description in this embodiment, which constitutes no limitation on an actually used acquiring manner.
Second: Send a second power control instruction to the UE according to the third power control parameter, where the second power control instruction is used to instruct the UE to send, on the control channel, data at the second power in the data transmission period.

After the network side device obtains the third power control parameter by calculation, the network side device may send the second power control instruction to the UE according to the third power control parameter.

The step of sending, by the network side device, the second power control instruction to the UE may include:
(1). Acquiring a current power control parameter of the UE at a periodic power adjustment moment corresponding to the data transmission period.
   Because the network side device may adjust the transmit power of the uplink control channel of the UE in a periodic adjustment manner, the network side device may acquire the current power control parameter of the UE at the periodic power adjustment moment corresponding to the data transmission period.
   The periodic power adjustment moment refers to a moment each time the network side device adjusts the transmit power of the uplink control channel of the UE. For example, the network side device may adjust the transmit power of the uplink control channel of the UE once every transmission time interval, and in this case, the periodic power adjustment moment is each TTI moment.
   In addition, the step of acquiring, by the network side device, the current power control parameter of the UE may include:
   with the power control parameter being a signal-to-noise ratio as an example, receiving, by the network side device, a signal sent by the UE, calculating a signal-to-noise ratio of the received signal, and using the signal-to-noise ratio obtained by calculation as the current power control parameter. Certainly, the network side device may further acquire the current signal-to-noise ratio of the UE in another acquiring manner, which is not limited in this embodiment.
(2). Calculating an adjustment value of the second power of this power adjustment according to the current power control parameter and the third power control parameter.
   After obtaining the current power control parameter of the UE by calculation, the network side device may calculate the adjustment value of the second power of this power adjustment according to the current power control parameter and the third power control parameter.
   The network side device may adjust the transmit power of the uplink control channel of the UE by means of a preset power adjustment step, that is, at each periodic power adjustment moment, the network side device may instruct the UE to adjust the transmit power of the uplink control channel by the preset power adjustment step.
   When the power control parameter is the signal-to-noise ratio, and the current power control parameter is less than the third power control parameter, the network side device may instruct the UE to increase the transmit power of the uplink control channel by one preset power step, that is, the adjustment value of the second power is a positive preset power adjustment step; when the current power control parameter is greater than the third power control parameter, the network side device may instruct the UE to reduce the transmit power of the uplink control channel by one preset power step, that is, the adjustment value of the second power is a negative preset power adjustment step.
   It should be noted that, in this embodiment, that each adjustment is performed by one preset power adjustment step is used only as an example, and a network side device may further adjust the transmit power of the uplink control channel of the UE in another adjustment manner, which is not limited in this embodiment.
(3). Sending a second power control instruction that carries the adjustment value of the second power to the UE.

After obtaining the adjustment value of the second power by calculation, the network side device may send the second power control instruction that carries the adjustment value of the second power to the UE.

Correspondingly, after receiving the second power control instruction, the UE sends, on the control channel, data to the network side device at the second power in the data transmission period.

After the UE performs an adjustment on the transmit power of the uplink control channel according to a power control instruction received at each periodic power adjustment moment in the data transmission period, the transmit power of the control channel of the UE is the second power, and the UE sends data to the network side device at the adjusted second power in the data transmission period.

When the UE sends data at the adjusted second power, a parameter value of the power control parameter of the UE is the third power control parameter, or is not less than the third power control parameter, which is not limited in this embodiment.

Optionally, because there may be m data transmission periods and m silent periods, where m is a positive integer greater than or equal to 1, the network side device may send, to the UE, a power control instruction that is used to instruct the UE to send, on the control channel, data at the first power in m silent periods.

Optionally, because the data transmission period and the silent period may be alternately arranged periods, for example, silent period 1, data transmission period 1, silent period 2, data transmission period 2,..., silent period m, and data transmission period m, the network side device may further send, to the UE after a previous data transmission period ends and before a current silent period ends, the power control instruction that is used to instruct the UE to send, on the control channel, data at the first power in the current silent period, which is not limited in this embodiment. In addition, in order to further reduce power consumption of the uplink control channel of the UE, the network side device may send a power control instruction to the UE at an ending moment of each data transmission period, which is not limited in this embodiment.

The power control apparatus, network side device, and user equipment in the embodiments of the present invention may further specifically execute methods in the embodiments shown in FIG. 9 to FIG. 15, and details are not described herein again.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the principle of the present invention shall fall within the protection scope of the present invention.

## Claims

1. A power control apparatus, comprising:
an acquiring module, configured to acquire a data transmission period and a silent period of user equipment UE; and
a receiving module, configured to receive, in the silent period, data sent by the UE on a control channel at first power, wherein the first power is less than second power used by the UE for sending data on the control channel in the data transmission period.

2. The apparatus according to claim 1, wherein the apparatus further comprises:
a sending module, configured to send a configuration instruction to the UE, wherein the configuration instruction is used to indicate the data transmission period and/or the silent period of the UE.

3. The apparatus according to claim 1 or 2, wherein the apparatus further comprises:
a first acquiring module, configured to acquire a first power control parameter required for maintaining synchronization with the UE, wherein transmit power corresponding to the first power control parameter is equal to the first power; and
a first sending module, configured to send a power control instruction to the UE according to the first power control parameter acquired by the first acquiring module, wherein the power control instruction is used to instruct the UE to send data at the first power in the silent period.

4. The apparatus according to claim 1 or 2, wherein the apparatus further comprises:
a second acquiring module, configured to acquire a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, wherein transmit power corresponding to the second power control parameter is equal to the first power; and
a second sending module, configured to send a power control instruction to the UE according to the second power control parameter acquired by the second acquiring module, wherein the power control instruction is used to instruct the UE to send data at the first power in the silent period.

5. The apparatus according to claim 1 or 2, wherein the apparatus further comprises:
a third acquiring module, configured to acquire a first power control parameter required for maintaining synchronization with the UE;
a fourth acquiring module, configured to acquire a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, wherein the first power is equal to a maximum value between transmit power corresponding to the first power control parameter and transmit power corresponding to the second power control parameter; and
a third sending module, configured to send a power control instruction to the UE according to the first power control parameter acquired by the third acquiring module and the second power control parameter acquired by the fourth acquiring module, wherein the power control instruction is used to instruct the UE to send data at the first power in the silent period.

6. A power control apparatus, applied to user equipment UE, wherein the apparatus comprises:
an acquiring module, configured to acquire a data transmission period and a silent period; and
a sending module, configured to send, on a control channel, data to a network side device by the UE at first power in the silent period, wherein the first power is less than second power used by the UE for sending data on the control channel in the data transmission period.

7. The apparatus according to claim 6, wherein the apparatus further comprises:
a receiving module, configured to receive a configuration instruction sent by the network side device, wherein the acquiring module acquires the data transmission period and/or the silent period of the UE according to the configuration instruction.

8. The apparatus according to claim 6, wherein:
the receiving module is further configured to receive a power control instruction sent by the network side device; and
the sending module is further configured to send, according to the power control instruction received by the receiving module, data to the network side device at the first power in the silent period.

9. The apparatus according to any one of claims 6 to 8, wherein the first power is transmit power corresponding to a first power control parameter required when the UE maintains synchronization with the network side device.

10. The apparatus according to any one of the claims 6 to 8, wherein the first power is transmit power corresponding to a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

11. The apparatus according to any one of claims 6 to 8, wherein the first power is a maximum value between transmit power corresponding to a first power control parameter and transmit power corresponding to a second power control parameter, wherein
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

12. A network side device, comprising a processor and a receiver, wherein
the processor is configured to acquire a data transmission period and a silent period of user equipment UE; and
the processor is configured to control, in the silent period, the receiver to receive data sent by the UE on a control channel at first power, wherein the first power is less than second power used by the UE for sending data on the control channel in the data transmission period.

13. The network side device according to claim 12, further comprising a transmitter, wherein
the processor is configured to control the transmitter to send a configuration instruction to the UE, wherein the configuration instruction is used to indicate the data transmission period and/or the silent period of the UE.

14. The network side device according to claim 12 or 13, wherein:
the processor is configured to control the receiver to acquire a first power control parameter required for maintaining synchronization with the UE, wherein transmit power corresponding to the first power control parameter is equal to the first power; and
the processor is configured to control the transmitter to send, according to the first power control parameter, a power control instruction to the UE, wherein the power control instruction is used to instruct the UE to send data at the first power in the silent period.

15. The network side device according to claim 12 or 13, wherein:
the processor is configured to control the receiver to acquire a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, wherein transmit power corresponding to the second power control parameter is equal to the first power; and
the processor is configured to control the transmitter to send, according to the second power control parameter, a power control instruction to the UE, wherein the power control instruction is used to instruct the UE to send data at the first power in the silent period.

16. The network side device according to claim 12 or 13, wherein:
the processor is configured to control the receiver to acquire a first power control parameter required for maintaining synchronization with the UE;
the processor is configured to control the receiver to acquire a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, wherein the first power is equal to a maximum value between transmit power corresponding to the first power control parameter and transmit power corresponding to the second power control parameter; and
the processor is configured to control the transmitter to send, according to the first power control parameter and the second power control parameter, a power control instruction to the UE, wherein the power control instruction is used to instruct the UE to send data at the first power in the silent period.

17. User equipment UE, comprising a processor and a transmitter, wherein
the processor is configured to control the receiver to acquire a data transmission period and a silent period; and
the processor is configured to control, in the silent period, the transmitter to send, on a control channel, data to a network side device at first power, wherein the first power is less than second power used by the UE for sending data on the control channel in the data transmission period.

18. The user equipment according to claim 17, further comprising a receiver, wherein
the processor is configured to control the receiver to receive a configuration instruction sent by the network side device, wherein the configuration instruction is used to indicate the data transmission period and/or the silent period of the UE.

19. The user equipment according to claim 17, wherein:
the processor is configured to control the receiver to receive a power control instruction sent by the network side device; and
the processor is configured to control the transmitter to send, according to the power control instruction, data to the network side device at the first power in the silent period.

20. The user equipment according to any one of claims 17 to 19, wherein the first power is transmit power corresponding to a first power control parameter required when the UE maintains synchronization with the network side device.

21. The user equipment according to any one of the claims 17 to 19, wherein the first power is transmit power corresponding to a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

22. The user equipment according to any one of claims 17 to 19, wherein the first power is a maximum value between transmit power corresponding to a first power control parameter and transmit power corresponding to a second power control parameter, wherein
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

23. A power control method, comprising:
acquiring a data transmission period and a silent period of user equipment UE; and
receiving, in the silent period, data sent by the UE on a control channel at first power, wherein the first power is less than second power used by the UE for sending data on the control channel in the data transmission period.

24. The method according to claim 23, wherein the method further comprises:
sending a configuration instruction to the UE, wherein the configuration instruction is used to indicate the data transmission period and/or the silent period of the UE.

25. The method according to claim 23 or 24, wherein the method further comprises:
acquiring a first power control parameter required for maintaining synchronization with the UE, wherein transmit power corresponding to the first power control parameter is equal to the first power; and
sending a power control instruction to the UE according to the first power control parameter, wherein the power control instruction is used to instruct the UE to send data at the first power in the silent period.

26. The method according to claim 23 or 24, wherein the method further comprises:
acquiring a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, wherein transmit power corresponding to the second power control parameter is equal to the first power; and
sending a power control instruction to the UE according to the second power control parameter, wherein the power control instruction is used to instruct the UE to send data at the first power in the silent period.

27. The method according to claim 23 or 24, wherein the method further comprises:
acquiring a first power control parameter required for maintaining synchronization with the UE;
acquiring a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period, wherein the first power is equal to a maximum value between transmit power corresponding to the first power control parameter and transmit power corresponding to the second power control parameter; and
sending a power control instruction to the UE according to the first power control parameter and the second power control parameter, wherein the power control instruction is used to instruct the UE to send data at the first power in the silent period.

28. A power control method, comprising:
acquiring, by user equipment UE, a data transmission period and a silent period; and
sending, by the UE on a control channel, data to a network side device at first power in the silent period, wherein the first power is less than second power used by the UE for sending data on the control channel in the data transmission period.

29. The method according to claim 28, wherein the acquiring, by UE, a data transmission period and a silent period comprises:
receiving, by the UE, a configuration instruction sent by the network side device, wherein the configuration instruction is used to indicate the data transmission period and/or the silent period of the UE.

30. The method according to claim 28, wherein the method further comprises:
receiving, by the UE, a power control instruction sent by the network side device; and
the sending, by the UE on a control channel, data to a network side device at first power comprises:
sending, by the UE according to the power control instruction, the data to the network side device at the first power in the silent period.

31. The method according to any one of claims 28 to 30, wherein the first power is transmit power corresponding to a first power control parameter required when the UE maintains synchronization with the network side device.

32. The method according to any one of the claims 28 to 30, wherein the first power is transmit power corresponding to a second power control parameter, wherein the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.

33. The method according to any one of claims 28 to 30, wherein the first power is a maximum value between transmit power corresponding to a first power control parameter and transmit power corresponding to a second power control parameter, wherein
the first power control parameter is a power control parameter required when the UE maintains synchronization with the network side device; and
the second power control parameter is a difference between a threshold and a power control parameter of the control channel of the UE in the data transmission period, and the threshold is a maximum empirical threshold between the power control parameter of the control channel of the UE in the data transmission period and a power control parameter of the control channel of the UE in the silent period.
